# FASCICULE DE BREVET EUROPEEN

(11) **EP 1 827 904 B1**
(45) Date de publication et mention de la délivrance du brevet: **02.03.2016**
(21) Numéro de dépôt: 05824603.4
(22) Date de dépôt: 06.12.2005
(51) Int. Cl.: B60P 1/64

(54) **TRAVERSE MOBILE DE SUPPORT ET DE TRANSFERT POUR LE CHARGEMENT ET LE DECHARGEMENT D'UNE CHARGE, SUR UNE REMORQUE A PARTIR D'UN CAMION EQUIPE D'UN BRAS DE MANUTENTION DES CHARGES.**
MOBILER QUERTRÄGER ZUR ABSTÜTZUNG UND ÜBERGABE ZUM LADEN UND ENTLADEN EINER LAST AUF EINEM ANHÄNGER VON EINEM MIT EINEM LASTHANDHABUNGSARM VERSEHENEN LASTWAGEN
MOBILE SUPPORT AND TRANSFER CROSS-MEMBER FOR LOADING AND UNLOADING A LOAD, ON A TRAILER FROM A TRUCK EQUIPPED WITH A LOAD-HANDLING ARM

(30) Priorité: 06.12.2004 FR 0412956
(43) Date de publication de la demande: 05.09.2007
(73) Titulaire: Soframe, 67980 Hangenbieten (FR)
(72) Inventeur: DONNARD, René, F-67980 HANGENBIETEN (FR); MORIZOT, Frédéric, F-67980 HANGENBIETEN (FR); MOREL, Hervé, F-67980 HANGENBIETEN (FR)
(74) Mandataire: Merckling, Norbert
(86) Numéro de dépôt international: PCT/FR2005/003055
(87) Numéro de publication internationale: WO 2006/061508

(56) Documents cités:
- DE-A1- 2 731 701
- DE-U1- 8 800 351
- GB-A- 2 112 756
- US-A- 2 494 735
- US-A- 4 915 567

## Description

La présente invention concerne une traverse mobile de support et de transfert pour le chargement et le déchargement d'un conteneur ou d'un plateau déposable et plus généralement d'une charge routière, respectivement sur ou d'une remorque routière à partir d'un ou vers un camion équipé d'un bras de préhension et de manutention de charges.

Dans l'art antérieur, de nombreux systèmes de chargement et de déchargement d'un conteneur ou d'un plateau déposable portant une charge sur ou à partir d'un camion ont été décrits. Classiquement, le chargement s'effectue à l'aide d'un bras hydraulique articulé se trouvant sur le camion qui saisit la charge posée au sol et la hisse sur le camion, le déchargement s'effectuant en sens inverse. Une traverse mobile pour le déchargement d'un conteneur est montrée par DE8800351U.

Lorsque l'on souhaite augmenter la capacité de transport, le camion est attelé à une remorque susceptible de porter une charge routière complémentaire, par exemple un deuxième conteneur ou un plateau déposable ou des plateaux vides superposés. Généralement, pour ne pas augmenter inconsidérément le coût de la remorque, celle-ci n'est pas équipée de son propre système de chargement/déchargement. Le chargement/déchargement de la remorque s'effectue alors par l'intermédiaire du camion et de son bras articulé de préhension.

Pour charger un conteneur sur la remorque, celui-ci est d'abord chargé sur le camion au moyen de son bras de préhension, à partir du sol. Puis, le camion recule jusqu'à venir se positionner devant l'extrémité avant de la remorque. Le conteneur, poussé par le bras de préhension du camion, est alors transféré sur la remorque.

Ce transfert s'effectue en levant l'avant du conteneur par son anse de préhension ou par une pièce intermédiaire frontale d'interface, à l'aide du crochet du bras de préhension. Puis, en le poussant vers l'arrière du camion, on le fait reposer par son arête inférieure ou ses coins inférieurs arrière sur l'avant de la remorque et on le fait glisser ou rouler le long du châssis de celle-ci sous l'action de la force de poussée provenant du bras de préhension et de manutention porté par le camion.

Le camion s'éloigne ensuite de la remorque, charge un autre conteneur sur son propre plateau et retourne s'atteler à la remorque pour entraîner le convoi.

A l'inverse, pour procéder au déchargement, la remorque est détachée, le camion est déchargé, la charge de la remorque est transférée sur le camion, puis déchargée à son tour.

Le problème technique visé par l'invention consiste à transférer un conteneur, normalisé ISO ou non, ou un plateau déposable, préhensible directement ou au moyen d'une interface, par un bras de préhension et de manutention et ce, d'un camion où il se trouve en position de chargement sur une remorque, puis à l'amener dans une position de chargement et de transport sur cette remorque.

Le mérite de l'invention est d'y procéder de façon complète, simple et rapide, sans réglage préalable ou mise en disposition complexe d'alignement ou d'ajustement entre le camion, son bras de préhension et la remorque.

Dans l'art antérieur, on s'est déjà intéressé au problème du transfert des conteneurs d'un camion vers une remorque à l'aide d'un bras de préhension et de manutention porté par un camion.

Une première solution divulguée par le brevet britannique BOUGHTON n° GB 2.112.756 consiste à équiper les coins inférieurs arrière du conteneur de moyens de roulement ou d'un support temporaire équipé lui-même de moyens de roulement. Le conteneur roule supporté par son arête inférieure arrière sur des plaques longitudinales de la remorque jusque dans sa position de transport à l'extrémité de la remorque. Là, il s'y trouve immobilisé en vue du transport.

Une autre solution est décrite dans le brevet américain ELLINGSEN n° US 4.915.567. Dans le système décrit, on utilise pour réaliser le transfert des plateaux spéciaux munis au niveau de leurs coins inférieurs arrière de patins de glissement. Pendant le chargement, ces patins glissent sur des pistes de glissement de la remorque, longitudinales et lisses, de manière à faciliter le transfert.

Ces solutions apparaissent intéressantes, mais présentent cependant de nombreux inconvénients.

Elles nécessitent toutes les deux l'utilisation de conteneurs ou de plateaux particuliers, spécialement équipés de moyens de roulement ou de patins adéquats, et ne permettent pas le chargement de conteneurs ou de plateaux déposables standards.

Par ailleurs, le guidage du conteneur ou du plateau lors de son transfert sur la remorque ne dépend que du travail du bras de préhension et de manutention. Il faut donc prendre un soin tout particulier dans les ajustements d'alignement entre le camion et la remorque.

Dans ces systèmes, il n'existe aucun moyen de compensation des erreurs et défauts de l'alignement latéral ou angulaire entre le camion et la remorque. Celui-ci doit donc être réglé minutieusement par des manoeuvres longues et délicates du camion qui doit être parfaitement positionné par rapport à la remorque avant que le transfert puisse commencer.

En cas de mauvais positionnement relatif du camion et de la remorque, le transfert ne peut aboutir correctement et le bras de manutention n'arrive pas à placer le conteneur ou le plateau en position sécurisée de transport. Il doit être rechargé sur le camion et l'alignement rectifié, avant de procéder à une nouvelle tentative de transfert.

En outre, ces techniques sont peu exploitables dans le cas de remorques à châssis bas ou de différence importante de hauteur entre le camion et la remorque, par exemple en cas de sol inégal. En effet, l'inclinaison du conteneur a ses limites, celle du bras également. De plus, la majorité des conteneurs, en tout cas ceux normalisés, ne sont pas construits pour se trouver en situation de porte-à-faux, mais au contraire doivent toujours être portés par leurs pièces de coin. Celles-ci, bien entendu, se trouvent aux coins, notamment inférieurs du conteneur.

Ces opérations préalables de positionnement et de réglage d'alignement sont longues et particulièrement délicates pour l'opérateur, ce qui représente un inconvénient majeur de ces systèmes souvent destinés à des opérations militaires pour lesquelles la rapidité du chargement/déchargement est primordiale.

Pour résoudre ce problème technique l'invention fournit une traverse mobile de support et de transfert pour le chargement et le déchargement d'une charge notamment routière, par exemple un conteneur ou un plateau déposable, respectivement sur ou d'une remorque routière à partir d'un ou vers un camion équipé d'un bras articulé de manutention des charges.

Cette traverse est formée d'un corps allongé. Elle est destinée à être posée transversalement sur la face supérieure d'une remorque, à recevoir en appui l'extrémité arrière de la charge routière et à se déplacer dans les deux sens le long des longerons de cette remorque sous l'action du bras de manutention du camion.

Selon l'invention, la traverse comporte :
- au moins une interface de chargement située sur la partie supérieure de la traverse mobile de transfert coopérant avec des moyens complémentaires portés par la charge routière ou équipant celle-ci,
- des moyens de déplacement aptes à porter la traverse et la charge en appui sur celle-ci, permettant à la traverse de se déplacer de façon guidée sur des pistes de transfert prévues longitudinalement sur la remorque, et
- un agencement particulier de sa partie inférieure de manière à créer en position avant, un jeu de réglage autorisant un déplacement latéral et/ou angulaire d'ajustement de la traverse mobile de transfert par rapport à l'axe longitudinal de la remorque lors du chargement et afin de pouvoir compenser un écart d'alignement entre le camion et la remorque lors du transfert.

De préférence, la traverse mobile de support et de transfert selon l'invention comporte en outre un moyen d'élévation permettant de modifier la hauteur de l'interface de chargement par rapport au plan défini par la face supérieure des longerons de la remorque.

Avantageusement, cette traverse est utilisable indifféremment pour le chargement/déchargement d'un conteneur, d'un plateau de chargement déposable, ou de toute charge utile portée par un cadre de transport et/ou possédant les interfaces appropriées.

D'autres caractéristiques et avantages de l'invention apparaîtront à la lecture de la description détaillée qui va suivre, description faite en référence aux dessins annexés, dans lesquels :
- la figure 1 est une vue de l'arrière en perspective d'une traverse mobile de transfert selon un premier mode de réalisation de l'invention ;
- la figure 2 est une vue de l'avant en perspective d'une traverse mobile de transfert selon le premier mode de réalisation de l'invention ;
- la figure 3 est une vue de l'avant en perspective d'une traverse mobile de transfert selon le premier mode de réalisation de l'invention, les parties supérieure et inférieure de celle-ci se trouvant à l'état dissocié ;
- la figure 4 est une vue en perspective de l'arrière d'une traverse mobile de transfert, représentée coupée transversalement en partie médiane et correspondant au premier mode de réalisation de l'invention ;
- la figure 5 est une vue générale en perspective de la demi traverse mobile de transfert de la figure précédente montée sur une remorque compatible avec l'invention ;
- la figure 6 est un agrandissement de la vue en perspective de la figure 5 correspondant à la partie avant de la remorque équipée de la demi traverse mobile de transfert selon l'invention ;
- la figure 7 est une vue avant en perspective d'une traverse selon le premier mode de réalisation de l'invention supportant un conteneur ISO en position de transfert ;
- la figure 8 est une vue de l'arrière en perspective d'une traverse selon le premier mode de réalisation de l'invention montée sur une remorque et supportant un plateau déposable en position de transfert ;
- la figure 9 est une vue de l'avant en perspective d'une traverse selon le premier mode de réalisation de l'invention montée sur une remorque et supportant un plateau déposable en position de transfert ;
- la figure 10 est une vue de côté en plan d'une traverse selon le premier mode de réalisation de l'invention supportant un plateau déposable en position de transfert ;
- la figure 11 est une vue en coupe longitudinale, selon le plan de coupe XI-XI de la figure 10, d'une traverse selon le premier mode de réalisation de l'invention supportant un plateau déposable en position de transfert ;
- la figure 12 est une vue en coupe transversale, selon le plan de coupe XII-XII de la figure 11, d'une traverse selon le premier mode de réalisation de l'invention supportant un plateau déposable en position de transfert ;
- la figure 13 est une vue de l'arrière en perspective d'une traverse mobile de transfert selon un deuxième mode de réalisation de l'invention ;
- la figure 14 est une vue de l'avant en perspective d'une traverse mobile de transfert selon le deuxième mode de réalisation de l'invention ;
- la figure 15 est une vue de l'arrière en perspective d'une traverse mobile de transfert selon un troisième mode de réalisation de l'invention ;
- la figure 16 est une vue de l'avant en perspective d'une traverse mobile de transfert selon le troisième mode de réalisation de l'invention ;
- les figures 17 à 20 sont des vues schématiques de profil illustrant successivement différentes étapes du transfert d'un plateau déposable d'un camion vers une remorque à l'aide d'une traverse selon l'invention.

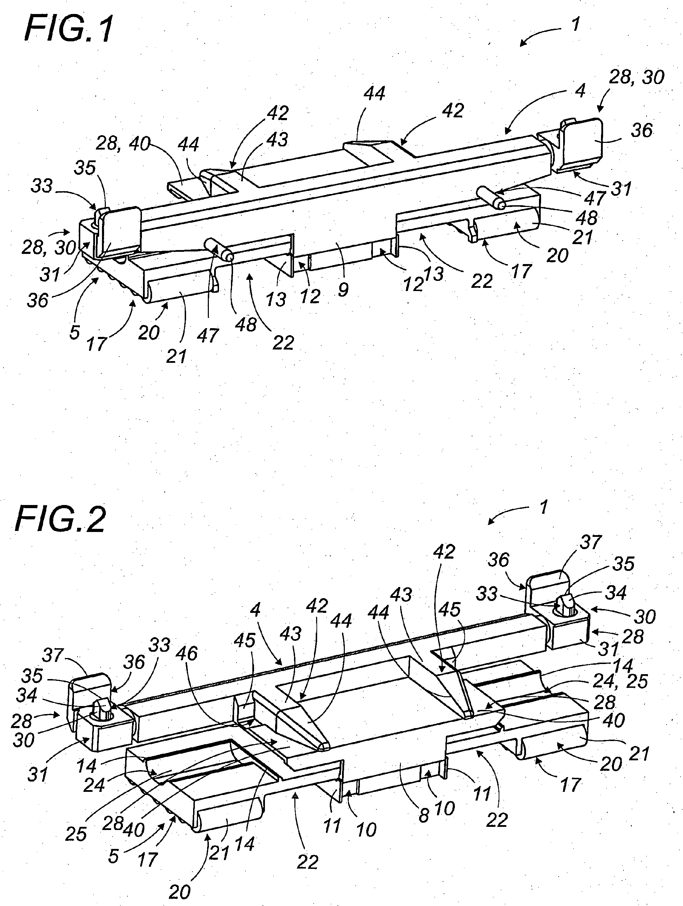

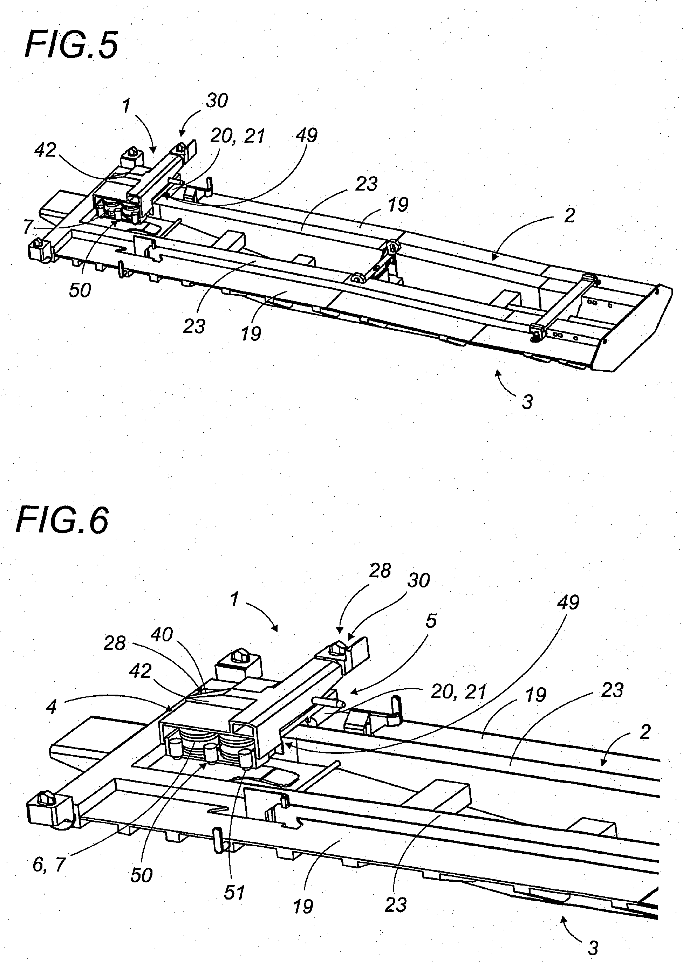

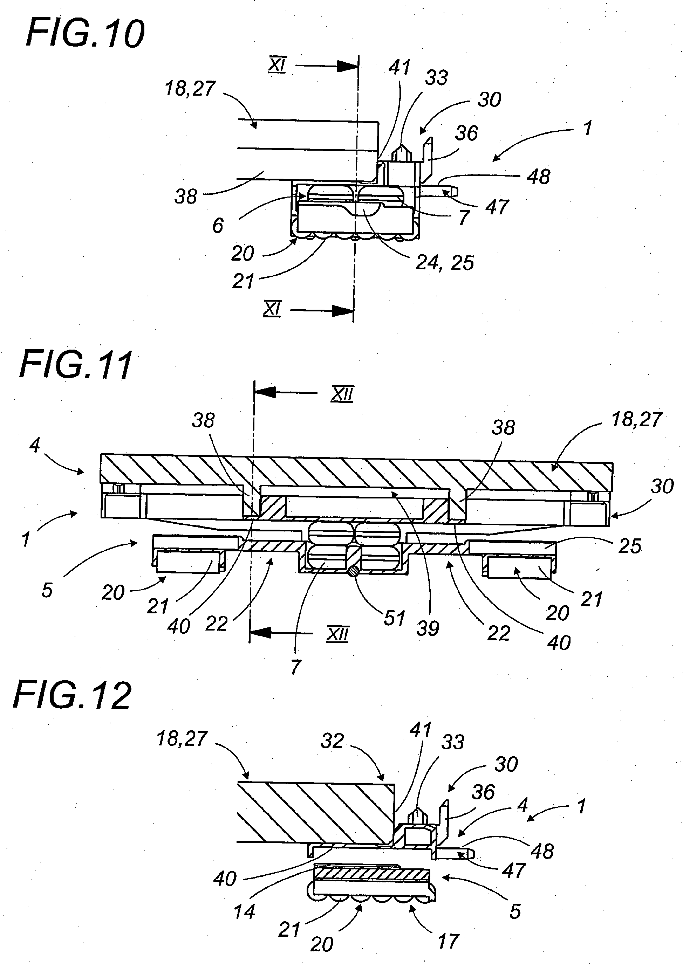

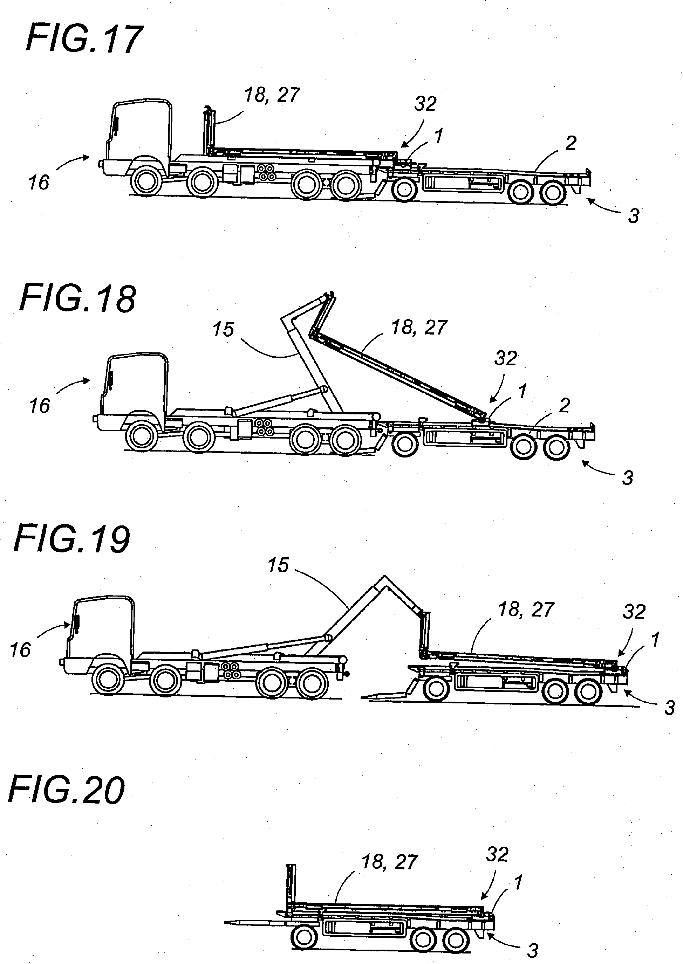

La traverse mobile de transfert selon la présente invention va maintenant être décrite de façon détaillée en référence aux figures 1 à 20. Les éléments équivalents représentés sur les différentes figures porteront les mêmes références numériques.

Par convention dans cette description, on désignera par avant le côté destiné à être placé vers le camion et par arrière celui destiné à être tourné vers la remorque.

La traverse mobile de transfert 1 est un corps allongé de forme générale parallélépipédique, destiné à être posé sur la face supérieure 2 d'une remorque 3, transversalement à celle-ci.

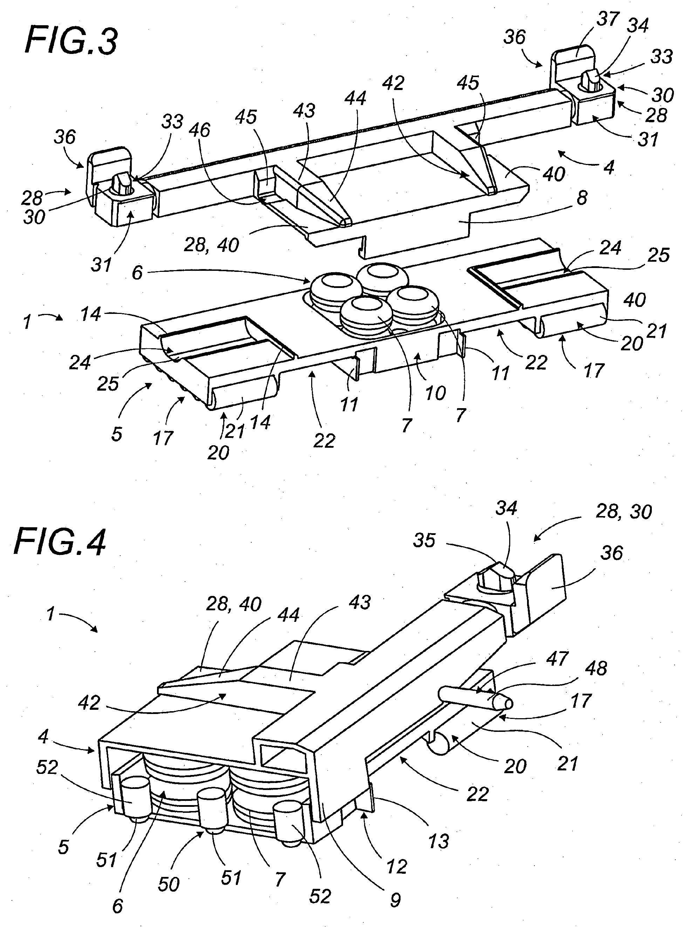

Selon la variante préférentielle représentée sur les figures 1 à 12, la traverse mobile de transfert 1 se compose de deux parties distinctes : une partie haute ou traverse haute 4 et une partie basse ou traverse basse 5, représentées dissociées sur la figure 3. Ces deux parties se trouvent superposées l'une sur l'autre en fonctionnement.

La traverse haute 4 et la traverse basse 5 sont reliées par un moyen d'élévation 6, intercalé entre les deux parties de la traverse. Celui-ci permet de modifier la position verticale de la traverse haute 4 par rapport à la traverse basse 5 et donc la hauteur totale utile de la traverse mobile de transfert 1 dans la limite de la course autorisée par le moyen d'élévation 6.

Ce moyen d'élévation 6 consiste de préférence en un ensemble de soufflets pneumatiques 7 par exemple avec valve, de préférence au nombre de quatre sur la variante représentée. Le moyen d'élévation 6 peut, dans sa forme la plus simple, être commandé manuellement. Cependant, son automatisation peut parfaitement être envisagée.

Avantageusement, le moyen d'élévation 6 permet une variation de préférence continue de la hauteur de la traverse haute 4 et le maintien de celle-ci à une hauteur quelconque comprise dans sa course totale, c'est-à-dire le déplacement vertical possible de la traverse haute 4 par rapport à la traverse basse 5. Le but d'une telle variation de hauteur sera explicité plus en détail par la suite.

Les deux parties haute 4 et basse 5 de la traverse mobile de transfert 1 sont assujetties l'une à l'autre. Le mouvement de montée ou de descente de la traverse haute 4 par rapport à la traverse basse 5 est guidé verticalement et latéralement, par exemple au moyen d'une paroi de guidage avant 8 et d'une paroi de guidage arrière 9 qui s'étendent sensiblement verticalement et vers le bas à partir de la traverse haute 4 et coulissent respectivement à l'avant le long d'une ou de deux gorges parallèles de guidage 10, bordées chacune latéralement par un rebord tel que 11 sensiblement vertical et à l'arrière le long d'une ou de deux gorges parallèles de guidage 12, bordées chacune latéralement par un rebord tel que 13 sensiblement vertical.

Les parties haute et basse de la traverse mobile de transfert sont limitées en déplacement vertical et ne peuvent donc se dissocier par un mouvement d'éloignement en raison de l'existence d'une butée haute de limitation.

Par exemple, le mouvement d'élévation est limité en amplitude par deux couples de rebords bas profilés en crochet vers l'intérieur de chaque paroi de guidage. Chaque couple de ces rebords est conformé dans une paroi de guidage arrière ou avant et joue le rôle de butée.

Avantageusement, une butée haute peut être combinée avec l'extrémité des gorges de guidage et au moins une paroi de guidage avant ou arrière.

Le moyen d'élévation 6, qui de préférence comporte au moins un soufflet pneumatique 7, peut permettre sous charge une légère amplitude de variation d'orientation angulaire favorisant le positionnement de la traverse haute 4 par l'effet d'auto-équilibrage des soufflets.

De préférence, la traverse basse 5 comporte en outre des nervures de guidage et d'immobilisation 14 disposées selon un contour partiel visible sur les figures 2 et 3, préférentiellement selon le contour périphérique de la traverse haute 4, de manière à supprimer les jeux nécessaires au mouvement relatif des deux parties de la traverse mobile de transfert 1, lorsque la traverse haute 4 se trouve en position basse.

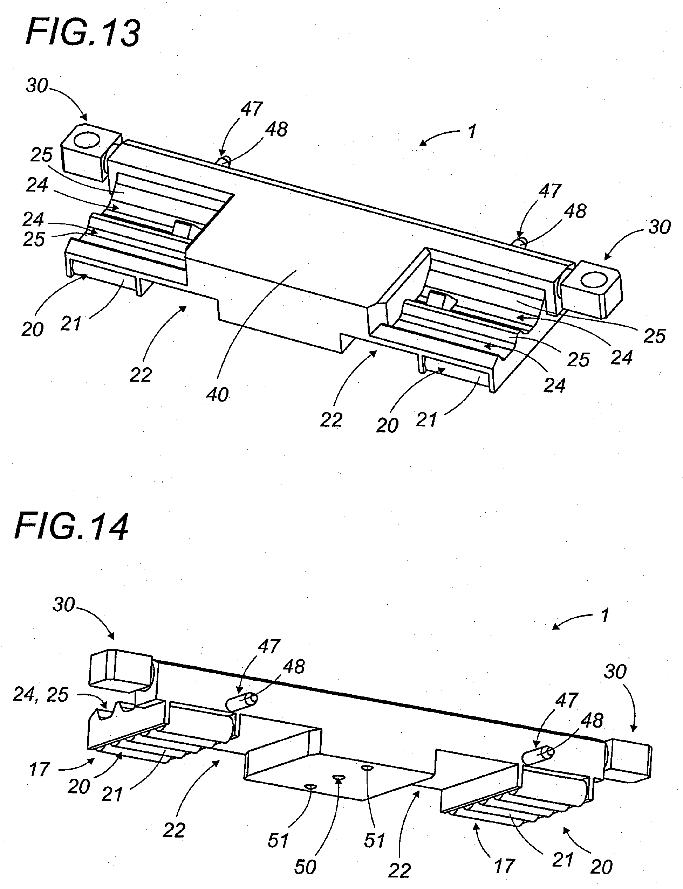

Selon d'autres modes de réalisation, la traverse mobile de transfert 1 peut aussi être réalisée plus simplement, monobloc et sans moyen d'élévation, comme par exemple dans le cas des variantes illustrées par les figures 13 à 16.

La traverse mobile de transfert 1 est destinée à être mobile et à se déplacer dans les deux sens le long des longerons de la remorque 3, sous l'action d'un bras de manutention 15 d'un camion 16 agissant sur la charge routière supportée par la traverse mobile de transfert.

A cette fin, elle comporte des moyens de déplacement 17 aptes à porter la traverse 1 et la charge routière 18 en appui sur celle-ci et permettant à la traverse mobile de transfert 1 de se déplacer sur des chemins ou des pistes de transfert 19 longitudinales prévues sur la remorque 3.

Ces moyens de déplacement 17 sont de préférence des moyens de roulement 20, par exemple sous la forme de supports de roulement équipés d'une série de rouleaux 21 dimensionnés pour reprendre une partie de la charge 18.

Ces moyens de roulement 20, montés préférentiellement en sous face et de chaque côté de la traverse mobile de transfert 1, sont destinés à rouler sur des pistes longitudinales de transfert 19 prévues de préférence de chaque côté de la partie supérieure 2 de la remorque 3.

Bien évidemment, les moyens de déplacement 17 peuvent être de nature différente. Il peut ainsi s'agir par exemple de moyens de glissement tels que des patins, des moyens de coulissement, sur coussin d'air ou plus généralement de fluide, ou de tout autre moyen de déplacement approprié.

Lors de son déplacement le long de la remorque 3, la traverse mobile de transfert 1 est guidée transversalement par rapport au châssis de la remorque. Ce guidage s'effectue de préférence au moyen de tunnels de guidage 22, ouverts vers le bas et s'étendant en sous face de la traverse basse 5. Ces tunnels de guidage 22, préférentiellement au nombre de deux, sont destinés à venir prendre appui et à coulisser sur les longerons 23 du châssis de la remorque 3 lorsque la traverse mobile de transfert 1 est montée sur la remorque 3. Ils permettent ainsi le guidage de déplacement de la traverse mobile de transfert 1 le long de la remorque 3, tout en évitant sa mise en biais pendant ses déplacements.

Avantageusement, la traverse mobile de transfert 1 selon l'invention et plus particulièrement la partie basse ou traverse basse 5 de celle-ci peut comporter une ou plusieurs cavité(s) de réception 24, par exemple sous la forme soit d'un logement individuel par exemple hémicylindrique 25, pour recevoir chacun des rouleaux pouvant équiper la sous face de l'extrémité arrière de certains conteneurs 26 ou plateaux déposables 27 soit plus généralement d'un logement adapté aux rouleaux et à la longueur de la charge routière 18.

Pour des raisons de compacité, ces cavités de réception 24 sont réalisées de préférence au-dessus des supports des moyens de roulement 20, et peuvent même être directement conformées dans le support de ces moyens de roulement 20 comme sur les variantes représentées.

La traverse peut aussi par exemple comporter de chaque côté un logement 25 universel c'est-à-dire de grande taille pour recevoir tout type de rouleaux de taille et de position normalisées ou non susceptible d'équiper le conteneur 26 ou le plateau 27 à charger. C'est par exemple le cas du premier mode de réalisation de la traverse mobile de transfert 1 illustré par les figures 1 à 12.

Dans ce cas, les logements 25 ne suffisent pas à réaliser une réelle immobilisation des rouleaux et la reprise de la charge 18, conteneur ou plateau, doit être assurée par un autre moyen comme il sera développé par la suite.

Il est également possible de réaliser un ou plusieurs logements adaptés aux dimensions précises des rouleaux et aux longueurs des plateaux de façon à pouvoir les immobiliser et ainsi reprendre la charge 18 au moyen de ses rouleaux lorsqu'elle en est équipée en entraînant ainsi la traverse mobile de transfert dans son déplacement.

Pour cela, la traverse peut comporter de chaque côté plusieurs types de logements 25, de profondeur, de largeur et de longueur différentes en fonction des différents types de rouleaux pouvant être rencontrés, comme sur la variante des figures 13 et 14.

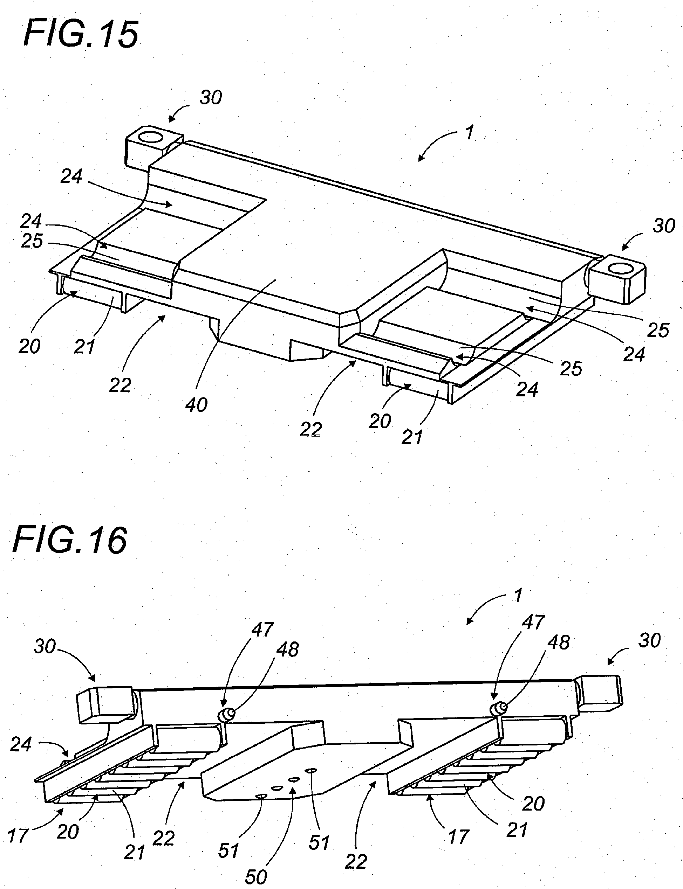

Elle peut également être conçue pour transporter toujours les mêmes conteneurs ou plateaux et ainsi correspondre à un ou plusieurs type(s) de rouleaux préalablement définis. Un ou plusieurs logement(s) 25 de dimensions et de forme appropriées seront alors ménagés sur la traverse mobile de transfert 1. La variante représentée sur les figures 15 et 16, qui comporte de chaque côté deux logements 25 prédéfinis, illustre un tel cas.

Par ailleurs, la traverse mobile de transfert 1 comporte en partie supérieure, au moins une interface de chargement 28 valable au moins isolément ou simultanément pour les conteneurs ISO et/ou les plateaux déposables à rouleaux. Cette interface de chargement 28 coopère avec des moyens complémentaires portés par la charge routière 18 ou équipant celle-ci.

Avantageusement mais non limitativement, la traverse mobile de transfert selon l'invention peut permettre de reprendre une charge 18 normalisée quel que soit son type.

Dans ce but, la partie supérieure de la traverse mobile de transfert 1, de préférence la traverse haute 4 présente les différents types d'interface 28 nécessaires au support et à la reprise d'entraînement selon la nature et le type de la charge routière 18.

Les conteneurs normalisés 26 et certains plateaux déposables 27 sont équipés de pièces de coins inférieures normalisées 29 appelées coins ISO, conçues pour permettre la préhension, la manutention et le verrouillage, par leur seul intermédiaire, du conteneur ou du plateau concerné.

Pour reprendre ce type de charge, la traverse mobile de transfert 1 selon l'invention comporte de préférence à chacune de ses extrémités latérales, un verrou 30, par exemple un verrou tournant, positionné et réalisé de manière appropriée pour coopérer avec les pièces de coins normalisées 29 de la charge 18.

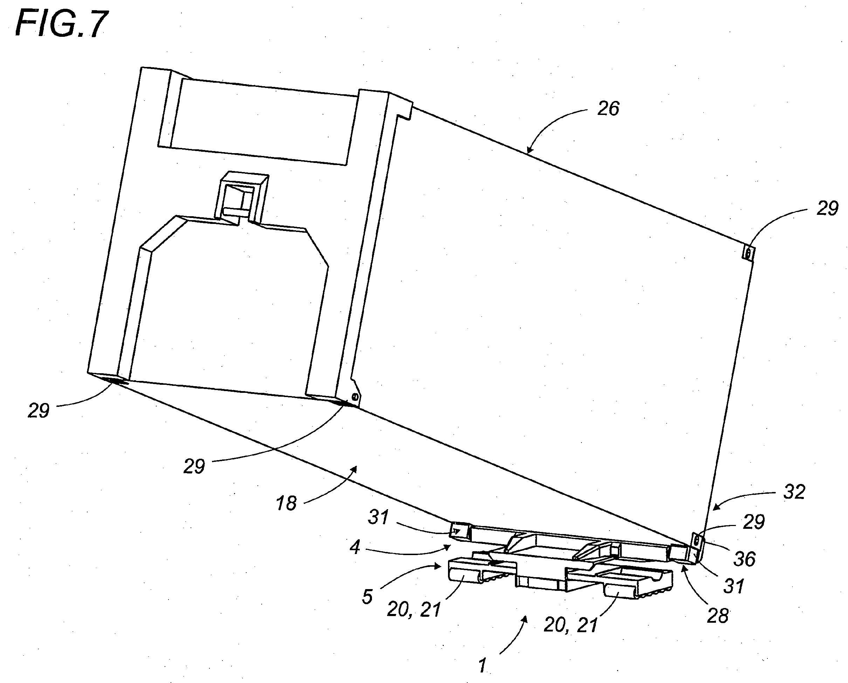

Un exemple de reprise d'un conteneur normalisé 26 munis de pièces 29 de coin ISO par une traverse mobile de transfert 1 selon l'invention a été illustré par la figure 7.

Les verrous 30 sont de préférence intégrés à ou montés sur des blocs pivotants 31 de manière à suivre l'inclinaison du conteneur 26 qui bascule durant la phase de chargement ou de déchargement du fait du mouvement du bras de manutention 15 du camion 16. Cette possibilité de pivotement des verrous 30 autorise le verrouillage de la charge 18 dès le début du processus de transfert.

De façon classique, les verrous 30 comprennent en outre un centreur 33 s'élevant vers le haut et se présentant sous la forme d'une saillie dont l'extrémité est conformée en quatre plans bombés ou plats dont deux faces opposées en oblique, formant deux surfaces 34 sensiblement planes et inclinées se rejoignant en une arête commune 35.

Ces verrous peuvent également comporter un taquet de centrage 36 s'élevant à l'arrière du verrou 30 sous la forme d'une paroi sensiblement verticale, à partie supérieure 37 en rampe oblique descendante en direction du verrou 30. Lorsque les verrous 30 en sont équipés, ces centreurs 33 et taquets de centrage 36 permettent un léger recentrage du conteneur 26 ou plateau 27 à l'approche des points de verrouillage.

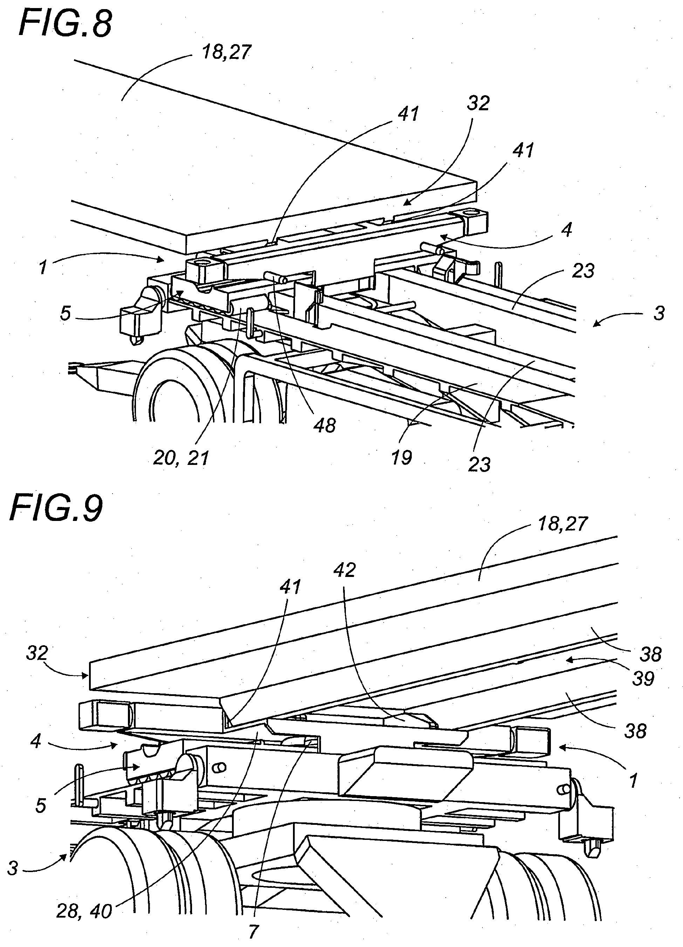

Les plateaux déposables 27 ne possèdent pas tous des pièces de coin normalisées 29 ou des rouleaux, mais présentent des longerons 38 de position et d'écartement normalisés formant au centre du plateau un tunnel 39 par la différence de hauteur avec les autres structures du plateau 27 (figure 9).

La reprise des plateaux déposables 27 peut ainsi s'effectuer au moyen d'un ou de plusieurs plan(s) de chargement 40 s'étendant sur la face supérieure de la traverse mobile de transfert 1, dans une zone correspondant à l'emplacement normalisé des longerons 38 de manière à pouvoir réceptionner et supporter l'extrémité arrière 41 des longerons 38 lorsque le bras de manutention 15 du camion 16 pousse le plateau déposable 27 vers la remorque 3. Il peut s'agir d'un unique plan de chargement 40 suffisamment large pour recevoir et supporter l'extrémité arrière 41 des deux longerons 38 ou de deux plans jumeaux de chargement 40 supportant chacun l'extrémité d'un seul longeron 38 du plateau déposable 27.

Pour que la mise en place de l'extrémité arrière 41 des longerons 38 du plateau 27 s'effectue correctement, la traverse peut comporter également au moins un, mais de préférence des centreurs de chargement 42 par exemple sous la forme de deux barres longitudinales 43, pénétrant à l'intérieur du tunnel 39 de manière à bloquer latéralement les longerons 38. Chacune de ces barres longitudinales 43 se termine de préférence par une extrémité en pointe 44 constituant une rampe inclinée de guidage pour l'intérieur des longerons 38 jusqu'à ce que le plateau déposable 27 arrive en position de transfert, dans laquelle l'extrémité arrière 41 de chacun des longerons 38 vient rencontrer une butée arrière 45.

Avantageusement, cette butée arrière 45 peut être précédée d'un dispositif de reprise ou de retenue par exemple sous la forme d'une encoche 46, ménagée dans le plan de chargement 40, permettant dé bloquer l'extrémité arrière du plateau déposable 27 lorsqu'il se trouve en position inclinée de déchargement afin d'éviter que le plateau 27 puisse s'échapper de la traverse mobile de transfert 1.

La traverse mobile de transfert 1 selon l'invention peut ainsi comporter une ou plusieurs interfaces de chargement 28 telles que décrites ci-dessus, selon qu'elle est universelle ou destinée exclusivement à un type donné de charge routière 18. De même, ces interfaces sont situées sur la traverse haute 4 lorsque la traverse mobile de transfert 1 est réalisée en deux parties.

Afin d'immobiliser la traverse mobile de transfert 1 à l'état vide ou chargé, lorsque la remorque 3 roule, la traverse comporte préférentiellement des moyens de blocage de la traverse 47, par exemple sous la forme de deux doigts de verrouillage 48 s'étendant à l'arrière de la traverse 1, destinés à coopérer avec un dispositif de verrouillage complémentaire situé à un endroit approprié de la remorque 3 par exemple à son extrémité arrière.

Selon une caractéristique essentielle de l'invention, la traverse mobile de transfert 1 présente un agencement particulier ou une conformation particulière de sa partie inférieure de manière à créer, lorsqu'elle est placée à l'avant de la remorque 3, un jeu de réglage 49 qui autorise un déplacement latéral et/ou angulaire d'ajustement de la traverse mobile de transfert 1 par rapport à l'axe longitudinal de la remorque 3. Ce déplacement permet ainsi de compenser un écart d'alignement entre le camion 16 et la remorque 3 lors du transfert.

Ce jeu de réglage 49 autorise un certain déplacement latéral et/ou angulaire de la traverse mobile de transfert 1 ou uniquement de sa partie supérieure 4 par rapport à la remorque 3. L'opérateur peut avantageusement optimiser le positionnement et l'orientation de la traverse mobile de transfert 1 par rapport à l'extrémité arrière 32 de la charge 18, afin de corriger les défauts d'alignement entre la remorque 3 et le camion 16. Grâce à ce jeu de réglage 49, la position des interfaces de chargement 28 de la traverse peut être réglée pour qu'elles se trouvent juste en dessous des zones correspondantes de la charge 18.

La traverse mobile de transfert 1, constituant une interface mobile parfaitement adaptée à chacune des deux structures routières, facilite ainsi les opérations de chargement et de déchargement de la charge par exemple routière.

Selon un mode de réalisation préférentiel, la traverse mobile de transfert 1 selon l'invention peut comporter en outre un moyen d'assistance au réglage 50. Ce moyen d'assistance 50, situé en sous face de la traverse mobile de transfert 1, préférentiellement en partie centrale de cette sous face, est formé par exemple d'une surface de contact et d'appui multidirectionnel, réalisée par exemple au moyen d'une série de contacts d'appui hémisphériques, de préférence des billes 51 montées en déplacement libre sur elles-mêmes et en déplacement d'enfoncement dans un logement 52, par exemple cylindrique.

Avantageusement, les billes 51 sont montées au niveau de la partie basse de la traverse mobile de transfert 1, préférentiellement au niveau de la traverse basse 5, par l'intermédiaire de ressorts de compression conférant ainsi aux billes 51 un caractère effaçable par rétraction.

Le dimensionnement et le nombre de ces billes 51 et de leurs ressorts de compression (non représentés) sont de préférence calculés afin de compenser la masse de la traverse mobile de transfert 1 à l'état libre et non chargé.

Le contact des billes 51 ainsi dimensionnées sur un plan d'appui de la remorque 3, conduit à légèrement surélever la traverse mobile de transfert 1 non chargée, supprimant en cas de situation d'équilibre, le contact des moyens de déplacement 17 de la traverse 1 sur les pistes de transfert 19 de la remorque 3.

Le réglage de la position relative de la traverse mobile de transfert 1 et en particulier de son interface de chargement 28, par rapport à la charge 18 peut alors s'effectuer aisément et manuellement.

Un léger mouvement de basculement en roulis de la traverse mobile de transfert 1 est également possible, ce qui facilite au besoin l'opération de verrouillage des conteneurs 26 ou plateaux déposables 27 munis de pièces de coin 29 ISO.

Lors de la reprise de la charge 18 par la traverse mobile de transfert 1, les ressorts des billes 51, sous dimensionnés par rapport au poids de la charge 18, provoquent l'effacement des billes 51 dans leur logement 52.

La charge 18 est reprise au niveau des moyens de déplacement 17 qui se retrouvent en contact avec les pistes de transfert 19 de la remorque 3. Le transfert peut alors avoir lieu normalement le long des longerons 23 de la remorque 3.

De manière évidente, l'invention ne se limite pas aux seuls modes de réalisation préférentiels décrits précédemment et représentés sur les différentes figures.

## Revendications

1. Traverse mobile de support et de transfert pour le chargement et le déchargement d'une charge notamment routière (18), par exemple un conteneur (26) muni ou non de pièces de coin ISO ou un plateau déposable (27) muni ou non de rouleaux, respectivement sur ou d'une remorque routière (3) à partir d'un ou vers un camion (16) équipé d'un bras articulé (15) de manutention des charges, traverse (1) formée d'un corps allongé, destinée à être posée transversalement sur une remorque (3), à recevoir en appui l'extrémité arrière (32) de la charge routière (18) et à se déplacer dans les deux sens le long des longerons (23) de cette remorque (3) sous l'action du bras de manutention (15) du camion (16) par entraînement de la charge, et avec :
- au moins une interface de chargement (28) située sur la partie supérieure de la traverse mobile de transfert (1) coopérant avec des moyens complémentaires (29, 41) portés par la charge routière (18) ou équipant celle-ci,
- des moyens de déplacement (17) aptes à porter la traverse (1) et la charge (18) en appui sur celle-ci, permettant à la traverse (1) de se déplacer de façon guidée sur des pistes de transfert (19) prévues longitudinalement sur la remorque (3),
et en outre avec :
- un agencement particulier de sa partie inférieure de manière à créer, lorsqu'elle est placée à l'avant de la remorque (3), un jeu de réglage (49) autorisant un déplacement latéral et/ou angulaire d'ajustement de la traverse mobile de transfert (1) par rapport à l'axe longitudinal de la remorque (3) afin de pouvoir compenser un écart d'alignement entre le camion (16) et la remorque (3) lors du transfert.

2. Traverse mobile de support et de transfert selon la revendication 1 **caractérisée en ce qu'**elle comporte en outre un moyen d'élévation (6) permettant de modifier la hauteur de l'interface de chargement (28) par rapport au plan défini par la face supérieure des longerons (23) de la remorque (3).

3. Traverse mobile de support et de transfert selon la revendication précédente **caractérisée en ce que** le moyen d'élévation (6) comporte au moins un soufflet pneumatique (7).

4. Traverse mobile de support et de transfert selon l'une quelconque des revendications précédentes **caractérisée en ce qu'**elle se compose d'une traverse haute (4) et d'une traverse basse (5) se trouvant superposées l'une sur l'autre en fonctionnement.

5. Traverse mobile de support et de transfert selon les revendications 2 et 4 **caractérisée en ce que** le moyen d'élévation (6) est intercalé entre la traverse haute (4) et la traverse basse (5) et permet d'élever ou d'abaisser la traverse haute (4) par rapport à la traverse basse (5).

6. Traverse mobile de support et de transfert selon la revendication précédente **caractérisée en ce que** les mouvements verticaux de la traverse haute (4) sont guidés au moyen d'une paroi de guidage avant (8) et d'une paroi de guidage arrière (9).

7. Traverse mobile de support et de transfert selon la revendication précédente **caractérisée en ce que** les parois de guidage avant (8) et arrière (9) coulissent respectivement le long d'une ou de deux gorges parallèles de guidage avant (10) bordées chacune latéralement par un rebord (11) sensiblement vertical et le long d'une ou de deux gorges de guidage arrière (12) bordées chacune latéralement par un rebord (13) sensiblement vertical.

8. Traverse mobile de support et de transfert selon la revendication précédente **caractérisée en ce qu'**une butée haute est combinée avec l'extrémité des gorges de guidage et au moins une paroi de guidage avant ou arrière.

9. Traverse mobile de support et de transfert selon l'une quelconque des revendications 4 à 7 **caractérisée en ce que** la traverse basse (5) comporte en outre des nervures d'immobilisation (14) disposées selon le contour périphérique de la traverse haute (4).

10. Traverse mobile de support et de transfert selon la revendication 1 **caractérisée en ce que** lés moyens de déplacement (17) sont des moyens de roulement (20).

11. Traverse mobile de support et de transfert selon la revendication précédente **caractérisée en ce que** les moyens de roulement (20) se présentent sous la forme d'une pluralité de rouleaux (21) disposés des deux côtés de la traverse (1).

12. Traverse mobile de support et de transfert selon l'une quelconque des revendications précédentes **caractérisée en ce qu'**elle présente dans sa sous face des tunnels de guidage (22) ouverts vers le bas permettant de la guider le long des longerons (23) de la remorque (3).

13. Traverse mobile de support et de transfert selon l'une quelconque des revendications précédentes **caractérisée en ce qu'**elle comporte en outre de chaque côté, au moins une cavité de réception (24) destinée à recevoir les rouleaux pouvant équiper l'extrémité arrière (32) de la charge routière (18).

14. Traverse mobile de support et de transfert selon la revendication précédente **caractérisée en ce que** l'au moins une cavité de réception (24) se présente sous la forme d'un logement individuel par exemple hémicylindrique (25) réalisé au-dessus des moyens de roulement (20).

15. Traverse mobile de support et de transfert selon la revendication 13 ou 14 **caractérisée par** au moins une deuxième cavité de réception correspondant à un autre type de rouleaux.

16. Traverse mobile de support et de transfert selon la revendication 13 ou 14 **caractérisée en ce que** l'au moins une cavité de réception (24) constitue un logement (25) universel capable de recevoir plusieurs types de rouleaux susceptibles d'équiper la charge routière (18).

17. Traverse mobile de support et de transfert selon la revendication 13 ou 14 **caractérisée en ce que** l'au moins une cavité de réception (24) constitue un logement (25) de forme et de dimensions adaptées pour recevoir à immobilisation un rouleau particulier d'un type prédéterminé de charge routière (18).

18. Traverse mobile de support et de transfert selon l'une quelconque des revendications précédentes **caractérisée en ce que** l'au moins une interface de chargement (28) comprend un ensemble de deux verrous de coin (30) positionnés de chaque côté de la traverse, de manière à pouvoir coopérer avec les pièces de coins normalisées (29) de la charge routière (18).

19. Traverse mobile de support et de transfert selon la revendication précédente **caractérisée en ce que** les verrous de coin (30) sont montés sur des blocs pivotants (31).

20. Traverse mobile de support et de transfert selon la revendication 18 ou 19 **caractérisée en ce que** chaque verrou de coin (30) comporte un centreur (33) sous la forme d'une saillie s'élevant vers le haut à extrémité présentant au moins deux faces opposées (34) en oblique.

21. Traverse mobile de support et de transfert selon l'une quelconque des revendications 18 à 20 **caractérisée en ce que** chaque verrou de coin (30) comporte un taquet de centrage (36) s'élevant à l'arrière du verrou (30) sous la forme d'une paroi sensiblement verticale, à partie supérieure (37) inclinée en direction du verrou (30).

22. Traverse mobile de support et de transfert selon l'une quelconque des revendications 1 à 17 **caractérisée en ce que** l'au moins une interface de chargement (28) comprend au moins un plan de chargement (40) susceptible de recevoir l'extrémité arrière (41) d'au moins un des longerons (38) normalisés d'un plateau déposable (27).

23. Traverse mobile de support et de transfert selon la revendication précédente **caractérisée en ce qu'**elle comporte en outre au moins un centreur de chargement (42) sous la forme de deux barres longitudinales (43) se prolongeant chacune par une extrémité en pointe (44), pénétrant à l'intérieur du tunnel (39) normalisé du plateau déposable (27).

24. Traverse mobile de support et de transfert selon la revendication 20 ou 21 **caractérisée en ce qu'**elle comporte en outre une butée arrière (45) pour l'extrémité arrière (41) de chaque longeron (23) du plateau déposable (27) lorsqu'il se trouve en position de transfert.

25. Traverse mobile de support et de transfert selon la revendication précédente **caractérisée en ce que** la butée arrière (45) est précédée d'un dispositif de reprise ou de retenue.

26. Traverse mobile de support et de transfert selon la revendication précédente **caractérisée en ce que** le dispositif de reprise ou de retenue précédant la butée arrière (45) est une encoche de blocage (46) ménagée dans le plan de chargement (40).

27. Traverse mobile de support et de transfert selon l'une quelconque des revendications précédentes **caractérisée en ce qu'**elle comporte plusieurs interfaces de chargement (28) différentes afin de pouvoir reprendre indifféremment plusieurs types de charges (18).

28. Traverse mobile de support et de transfert selon la revendication 27 **caractérisée par** des interfaces spécifiques aux conteneurs ISO.

29. Traverse mobile de support et de transfert selon la revendication 27 **caractérisée par** des interfaces spécifiques aux plateaux à rouleaux.

30. Traverse mobile de support et de transfert selon la revendication 27 **caractérisée par** des interfaces spécifiques aux conteneurs ISO et aux plateaux à rouleaux.

31. Traverse mobile de support et de transfert selon l'une quelconque des revendications précédentes **caractérisée en ce qu'**elle comporte un moyen de blocage (47) de la traverse (1) destiné à coopérer avec un dispositif de verrouillage complémentaire situé en un endroit approprié de la remorque (3).

32. Traverse mobile de support et de transfert selon la revendication précédente **caractérisée en ce que** le moyen de blocage (47) de la traverse (1) comprend deux doigts de verrouillage (48) s'étendant à l'arrière de la traverse (1).

33. Traverse mobile de support et de transfert selon l'une quelconque des revendications précédentes **caractérisée en ce qu'**elle comporte en outre un moyen d'assistance au réglage (50).

34. Traverse mobile de support et de transfert selon la revendication précédente **caractérisée en ce que** le moyen d'assistance au réglage (50) comprend une série de billes (51) montées mobiles sur elles-mêmes.

35. Traverse mobile de support et de transfert selon la revendication précédente **caractérisée en ce que** les billes (51) sont effaçables par rétraction dans un logement (52).

36. Traverse mobile de support et de transfert selon la revendication précédente **caractérisée en ce que** le caractère effaçable par rétraction des billes (51) et de retour en position sortie est conféré par des ressorts de compression conçus pour compenser la masse de la traverse (1) à l'état libre et s'affaisser lorsqu'elle se trouve à l'état chargé.

## Patentansprüche

1. Mobiler Träger- und Transfer-Querträger für das Be- und Entladen einer Ladung, insbesondre Straßenladung (18), z. B. ein Container (26), der mit ISO-Eckbeschlägen versehen ist oder nicht, oder ein abstellbares Plateau (27), das mit Rollen versehen ist oder nicht, jeweils auf oder von einem Straßenanhänger (3) von einem oder zu einem Lastkraftwagen (16), der mit einem artikulierten Arm (15) für das Heben von Lasten ausgerüstet ist, wobei der Querträger (1) aus einem länglichen Körper gebildet ist, der dazu bestimmt ist, quer auf einem Anhänger (3) aufgesetzt zu werden, aufstützend das hintere Ende (32) der Straßenlast (18) aufzunehmen und sich in den zwei Richtungen entlang der Längsträger (23) dieses Anhängers (3) unter der Wirkung des Hebearms (15) des Lastkraftwagens (16) per Antrieb der Last zu verschieben und mit:
- wenigstens einer Ladeschnittstelle (28), die sich auf dem oberen Teil des mobilen Transfer-Querträgers (1) befindet und mit komplementären Mitteln (29, 41) zusammenwirkt, die durch die Straßenlast (18) getragen werden oder diese ausrüsten,
- Verschiebemittel (17), die geeignet sind, den Querträger (1) und die Last (18) aufstützend auf dieser zu tragen, was es dem Querträger (1) erlaubt, sich auf geführte Weise auf Transferspuren (19) zu verschieben, die in Längsrichtung auf dem Anhänger (3) vorgesehen sind,
und darüber hinaus mit:
- einer besonderen Anordnung seines unteren Teils derart, dass, wenn er an der Vorderseite des Anhängers (3) platziert ist, ein Einstellspiel (49) geschaffen wird, das eine laterale und / oder winkelförmige Einstellverschiebung des mobilen Transfer-Querträgers (1) im Verhältnis zur Längsachse des Anhängers (3) zulässt, um eine Fluchtungsbeabstandung zwischen dem Lastkraftwagen (16) und dem Anhänger (3) beim Transfer ausgleichen zu können.

2. Mobiler Träger- und Transfer-Querträger gemäß Anspruch 1, **dadurch gekennzeichnet, dass** er darüber hinaus ein Erhebungsmittel (6) umfasst, das die Abänderung der Höhe der Schnittstelle der Ladung (28) im Verhältnis zu der Ebene erlaubt, die durch die obere Seite der Längsträger (23) des Anhängers (3) definiert ist.

3. Mobiler Träger- und Transfer-Querträger gemäß dem voranstehenden Anspruch, **dadurch gekennzeichnet, dass** das Erhebungsmittel (6) wenigstens einen Luftfederbalg (7) umfasst.

4. Mobiler Träger- und Transfer-Querträger gemäß einem der voranstehenden Ansprüche, **dadurch gekennzeichnet, dass** er sich aus einem hohen Querträger (4) und einem niedrigen Querträger (5) zusammensetzt, die im Betrieb jeweils überlagert sind.

5. Mobiler Träger- und Transfer-Querträger gemäß Anspruch 2 und 4, **dadurch gekennzeichnet, dass** das Erhebungsmittel (6) zwischen dem hohen Querträger (4) und dem niedrigen Querträger (5) zwischengeschaltet ist und das Erhöhen oder Absenken des hohen Querträgers (4) im Verhältnis zum niedrigen Querträger (5) erlaubt.

6. Mobiler Träger- und Transfer-Querträger gemäß dem voranstehenden Anspruch, **dadurch gekennzeichnet, dass** die vertikalen Bewegungen des hohen Querträgers (4) mittels einer vorderen Führungswand (8) und einer hinteren Führungswand (9) geführt sind.

7. Mobiler Träger- und Transfer-Querträger gemäß dem voranstehenden Anspruch, **dadurch gekennzeichnet, dass** die vordere (8) und hintere (9) Führungswand jeweils entlang einer oder zwei parallelen Auskehlungen der vorderen Führung (10) gleiten, die jeweils lateral durch einen Rand (11) gesäumt sind, der deutlich vertikal ist, und entlang einer oder zwei Auskehlungen der hinteren Führung (12), die jeweils lateral durch einen deutlich vertikalen Rand (13) gesäumt sind.

8. Mobiler Träger- und Transfer-Querträger gemäß dem voranstehenden Anspruch, **dadurch gekennzeichnet, dass** ein hoher Anschlag mit dem Ende der Führungsauskehlungen und wenigstens einer vorderen oder hinteren Führungswand kombiniert ist.

9. Mobiler Träger- und Transfer-Querträger gemäß Anspruch 4 bis 7, **dadurch gekennzeichnet, dass** der niedrige Querträger (5) darüber hinaus Feststellrippungen (14) umfasst, die gemäß der umlaufenden Kontur des hohen Querträgers (4) angeordnet sind.

10. Mobiler Träger- und Transfer-Querträger gemäß Anspruch 1, **dadurch gekennzeichnet, dass** die Verschiebemittel (17) Rollmittel (20) sind.

11. Mobiler Träger- und Transfer-Querträger gemäß dem voranstehenden Anspruch, **dadurch gekennzeichnet, dass** die Rollmittel (20) die Form einer Vielzahl von Rollen (21) aufweisen, die an den zwei Seiten des Querträgers (1) angeordnet sind.

12. Mobiler Träger- und Transfer-Querträger gemäß einem der voranstehenden Ansprüche, **dadurch gekennzeichnet, dass** er in seiner Unterseite Führungstunnel (22) aufweist, die nach unten offen sind und seine Führung entlang der Längsträger (23) entlang des Anhängers (3) zulassen.

13. Mobiler Träger- und Transfer-Querträger gemäß einem der voranstehenden Ansprüche, **dadurch gekennzeichnet, dass** er darüber hinaus an jeder Seite wenigstens eine Aufnahmeausnehmung (24) umfasst, die dazu bestimmt ist, die Rollen aufzunehmen, die das hintere Ende (32) der Straßenlast (18) ausrüsten können.

14. Mobiler Träger- und Transfer-Querträger gemäß dem voranstehenden Anspruch, **dadurch gekennzeichnet, dass** die wenigstens eine Aufnahmeausnehmung (24) die Form einer individuellen, z. B. halbzylindrischen Aufnahme (25) aufweist, die oberhalb der Rollmittel (20) realisiert ist.

15. Mobiler Träger- und Transfer-Querträger gemäß Anspruch 13 oder 14, **gekennzeichnet durch** wenigstens eine zweite Aufnahmeausnehmung, die einem anderen Rollentyp entspricht.

16. Mobiler Träger- und Transfer-Querträger gemäß Anspruch 13 oder 14, **dadurch gekennzeichnet, dass** die wenigstens eine Aufnahmeausnehmung (24) eine universelle Aufnahme (25) bildet, die geeignet ist, mehrere Rollentypen aufzunehmen, die die Straßenlast (18) ausrüsten können.

17. Mobiler Träger- und Transfer-Querträger gemäß Anspruch 13 oder 14, **dadurch gekennzeichnet, dass** die wenigstens eine Aufnahmeausnehmung (24) eine Aufnahme (25) in einer Form und in Abmessungen bildet, die geeignet sind, in Feststellung eine besondere Rolle eines vorbestimmten Typs einer Straßenlast (18) aufzunehmen.

18. Mobiler Träger- und Transfer-Querträger gemäß einem der voranstehenden Ansprüche, **dadurch gekennzeichnet, dass** die wenigstens eine Ladeschnittstelle (28) eine Gruppe aus zwei Eckbolzen (30) umfasst, die auf jeder Seite des Querträgers derart positioniert sind, dass sie mit den normalisierten Eckbeschlägen (29) der Straßenlast (18) zusammenwirken können.

19. Mobiler Träger- und Transfer-Querträger gemäß dem voranstehenden Anspruch, **dadurch gekennzeichnet, dass** die Eckbolzen (30) auf schwenkbaren Blöcken (31) montiert sind.

20. Mobiler Träger- und Transfer-Querträger gemäß Anspruch 18 oder 19, **dadurch gekennzeichnet, dass** jeder Eckbolzen (30) eine Zentriervorrichtung (33) in Form eines Vorsprungs umfasst, der sich nach oben an dem Ende erhebt, das wenigstens zwei entgegengesetzte Seiten (34) in Schrägstellung hat.

21. Mobiler Träger- und Transfer-Querträger gemäß einem der voranstehenden Ansprüche 18 bis 20, **dadurch gekennzeichnet, dass** jeder Eckbolzen (30) einen Zentrierungskeil (36) umfasst, der sich hinter dem Bolzen (30) in Form einer deutlich vertikalen Wand im in Richtung des Bolzens (30) geneigten oberen Teil (37) erhebt.

22. Mobiler Träger- und Transfer-Querträger gemäß Anspruch 1 bis 17, **dadurch gekennzeichnet, dass** die wenigstens eine Ladeschnittstelle (28) wenigstens eine Ladeebene (40) umfasst, die geeignet ist, das hintere Ende (41) wenigstens eines der normalisierten Längsträger (38) eines abstellbaren Plateaus (27) aufzunehmen.

23. Mobiler Träger- und Transfer-Querträger gemäß dem voranstehenden Anspruch, **dadurch gekennzeichnet, dass** er darüber hinaus wenigstens eine Lade-Zentriervorrichtung (42) in Form von zwei Längsstangen (43) umfasst, die sich jeweils durch ein spitzenförmiges Ende (44) verlängern und dabei ins Innere des normalisierten Tunnels (39) des abstellbaren Plateaus (27) eindringen.

24. Mobiler Träger- und Transfer-Querträger gemäß Anspruch 20 oder 21, **dadurch gekennzeichnet, dass** er darüber hinaus einen hinteren Anschlag (45) für das hintere Ende (41) jedes Längsträgers (23) des abstellbaren Plateaus (27) umfasst, wenn es sich in der Transferposition befindet.

25. Mobiler Träger- und Transfer-Querträger gemäß dem voranstehenden Anspruch, **dadurch gekennzeichnet, dass** dem hinteren Anschlag (45) eine Wiederaufnahme- oder Festhaltevorrichtung vorausgeht.

26. Mobiler Träger- und Transfer-Querträger gemäß dem voranstehenden Anspruch, **dadurch gekennzeichnet, dass** die Wiederaufnahme- oder Festhaltevorrichtung, die dem hinteren Anschlag (45) voransteht, eine Blockierkerbe (46) ist, die in der Ladeebene (40) ausgespart ist.

27. Mobiler Träger- und Transfer-Querträger gemäß einem der voranstehenden Ansprüche, **dadurch gekennzeichnet, dass** er mehrere unterschiedliche Ladeschnittstellen (28) umfasst, um beliebig mehrere Typen von Ladungen (18) aufnehmen zu können.

28. Mobiler Träger- und Transfer-Querträger gemäß Anspruch 27, **gekennzeichnet durch** für ISO-Container spezifische Schnittstellen.

29. Mobiler Träger- und Transfer-Querträger gemäß Anspruch 27, **gekennzeichnet durch** für Rollenplateaus spezifische Schnittstellen.

30. Mobiler Träger- und Transfer-Querträger gemäß Anspruch 27, **gekennzeichnet durch** für ISO-Container und für Rollenplateaus spezifische Schnittstellen.

31. Mobiler Träger- und Transfer-Querträger gemäß einem der voranstehenden Ansprüche, **dadurch gekennzeichnet, dass** er ein Blockiermittel (47) des Querträgers (1) umfasst, das dazu bestimmt ist, mit einer komplementären Verriegelungsvorrichtung zusammenzuwirken, die sich an einer geeigneten Stelle des Anhängers (3) befindet.

32. Mobiler Träger- und Transfer-Querträger gemäß dem voranstehenden Anspruch, **dadurch gekennzeichnet, dass** das Blockiermittel (47) des Querträgers (1) zwei Verriegelungsfinger (48) umfasst, die sich hinter dem Querträger (1) erstrecken.

33. Mobiler Träger- und Transfer-Querträger gemäß einem der voranstehenden Ansprüche, **dadurch gekennzeichnet, dass** er darüber hinaus ein Unterstützungsmittel für die Einstellung (50) umfasst.

34. Mobiler Träger- und Transfer-Querträger gemäß dem voranstehenden Anspruch, **dadurch gekennzeichnet, dass** das Unterstützungsmittel für die Einstellung (50) eine Serie von Kugeln (51) umfasst, die mobil auf sich selbst montiert sind.

35. Mobiler Träger- und Transfer-Querträger gemäß dem voranstehenden Anspruch, **dadurch gekennzeichnet, dass** die Kugeln (51) per Zurückziehen in eine Aufnahme (52) einziehbar sind.

36. Mobiler Träger- und Transfer-Querträger gemäß dem voranstehenden Anspruch, **dadurch gekennzeichnet, dass** das einziehbare Merkmal durch Zurückziehen der Kugeln (51) und die Rückkehr in die ausgefahrene Position durch Druckfedern verliehen wird, die dazu ausgelegt sind, um die Masse des Querträgers (1) im freien Zustand auszugleichen und nachzugeben, wenn er sich im geladenen Zustand befindet.

## Claims

1. Mobile cross member for support and transfer for the loading and unloading of a load (18) -notably road-hauled-, for example a container (26), whether or not fitted with ISO corner pieces, or a dismountable pallet (27), whether or not fitted with rollers, respectively onto or from a road-hauled trailer (3) from or onto a truck (16) equipped with an articulated load-handling arm (15), a cross member (1) composed of a stretched body, intended to be placed transversally on a trailer (3), to receive the bearing force of the rear end (32) of the road-hauled load (18), and to move in both directions along the longitudinal beams (23) of this trailer (3), under the action of the truck's (16) handling arm (15), by impelling the load, and with:
- at least one loading interface (28) located on the top part of the transfer mobile cross member (1) cooperating with complementary means (29, 41) carried by the road-hauled load (18) or fitted to it;
- means of movement (17) able to carry the cross member (1) and the load (18) bearing on it, allowing the cross member (1) to move in a guided manner on longitudinal transfer tracks (19) provided on the trailer (3);
and also incorporating:
- a special arrangement of its bottom part so as to create, when it is positioned at the front of the trailer (3), an adjustment play (49) allowing a lateral and/or angular adjustment movement of the transfer mobile cross member (1) in relation to the longitudinal axis of the trailer (3), so as to be able to compensate for an alignment shift between the truck (16) and the trailer (3) during the transfer.

2. Mobile cross member for support and transfer according to claim 1, **characterized in that** it also incorporates a means of elevation (6) allowing to modify the height of the loading interface (28) with respect to the plane defined by the upper face of the trailer's (3) longitudinal beams (23).

3. Mobile cross member for support and transfer according to the preceding claim, **characterized in that** the means of elevation (6) incorporates at least one pneumatic bellows (7).

4. Mobile cross member for support and transfer according to any one of the preceding claims, **characterized in that** it is composed of a top cross member (4) and a bottom cross member (5) that are positioned one above the other when in operational use.

5. Mobile cross member for support and transfer according to claims 2 and 4, **characterized in that** the means of elevation (6) is inserted between the top cross member (4) and the bottom cross member (5) and allows the top cross member (4) to be raised or lowered with respect to the bottom cross member (5).

6. Mobile cross member for support and transfer according to the preceding claim, **characterized in that** the vertical movements of the top cross member (4) are guided by a front guide wall (8) and a rear guide wall (9).

7. Mobile cross member for support and transfer according to the preceding claim, **characterized in that** the front guide wall (8) and rear guide wall (9) slide respectively along one or two parallel front guide channels (10) each being bounded laterally by an essentially vertical edge (11), and along one or two rear guide channels (12) each being bounded laterally by an essentially vertical edge (13).

8. Mobile cross member for support and transfer according to the preceding claim, **characterized in that** a top stop is combined with the extremity of the guide channels and at least one front or rear guide wall.

9. Mobile cross member for support and transfer according to any one of claims 4 to 7, **characterized in that** the bottom cross member (5) also incorporates immobilization ribs (14) positioned in accordance with the peripheral contour of the top cross member (4).

10. Mobile cross member for support and transfer according to claim 1, **characterized in that** the means of movement (17) are means of rolling (20).

11. Mobile cross member for support and transfer according to the preceding claim, **characterized in that** the means of rolling (20) take the form of a plurality of rollers (21) positioned on both sides of the cross member (1).

12. Mobile cross member for support and transfer according to any one of the preceding claims, **characterized in that** its underface has guidance tunnels (22) opened towards the bottom, allowing it to be guided along the longitudinal beams (23) of the trailer (3).

13. Mobile cross member for support and transfer according to any one of the preceding claims, **characterized in that** it also incorporates, on each side, an least one reception cavity (24) intended to accommodate the rollers that may be fitted on the rear end (32) of the road-hauled load (18).

14. Mobile cross member for support and transfer according to the preceding claim, **characterized in that** the at least one reception cavity (24) takes the form of an individual housing (25), for example semi-cylindrical, provided above the means of rolling (20).

15. Mobile cross member for support and transfer according to claim 13 or claim 14, **characterized in that** it has at least one second reception cavity corresponding to another type of roller.

16. Mobile cross member for support and transfer according to claim 13 or claim 14, **characterized in that** the at least one reception cavity (24) constitutes a universal housing (25) able to accommodate several types of roller that might be fitted on the road-hauled load (18).

17. Mobile cross member for support and transfer according to claim 13 or claim 14, **characterized in that** the at least one reception cavity (24) constitutes a housing (25) of appropriate shape and size to accommodate in immobilization a special roller of a previously-established type of road-hauled load (18).

18. Mobile cross member for support and transfer according to any one of the preceding claims, **characterized in that** the at least one loading interface (28) incorporates a set of two corner locks (30) positioned on each side of the cross member, so as to be able to cooperate with the standardized corner pieces (29) of the road-hauled load (18).

19. Mobile cross member for support and transfer according to the preceding claim, **characterized in that** the corner locks (30) are mounted on pivoting blocks (31).

20. Mobile cross member for support and transfer according to claim 18 or claim 19, **characterized in that** each corner lock (30) incorporates a centering system (33) taking the form of a projection extending upwards with an extremity having at least two oblique opposing faces (34).

21. Mobile cross member for support and transfer according to any one of the preceding claims 18 to 20, **characterized in that** each corner lock (30) incorporates a centering stud (36) extending upwards behind the lock (30), forming an essentially-vertical wall with a top part (37) inclined towards the lock (30).

22. Mobile cross member for support and transfer according to any one of claims 1 to 17, **characterized in that** the at least one loading interface (28) incorporates at least one loading surface (40) able to accommodate the rear extremity (41) of at least one of the standardized longitudinal beams (38) of a dismountable pallet (27).

23. Mobile cross member for support and transfer according to the preceding claim, **characterized in that** it also incorporates at least one load centering system (42) taking the form of two longitudinal bars (43) each extending at one end into a spike (44) penetrating inside the standardized tunnel (39) of the dismountable pallet (27).

24. Mobile cross member for support and transfer according to claim 20 or claim 21, **characterized in that** it also incorporates a rear stop (45) for the rear end (41) of each longitudinal beam (23) of the dismountable pallet (27) when it is in the transfer position.

25. Mobile cross member for support and transfer according to the preceding claim, **characterized in that** the rear stop (45) is preceded by a transfer or holding device.

26. Mobile cross member for support and transfer according to the preceding claim, **characterized in that** the transfer or holding device preceding the rear stop (45) is an immobilization notch (46) provided in the loading surface (40).

27. Mobile cross member for support and transfer according to any one of the preceding claims, **characterized in that** it incorporates several different loading interfaces (28), so as to be able to transfer several types of load (18).

28. Mobile cross member for support and transfer according to claim 27, **characterized in that** it has special interfaces for ISO containers.

29. Mobile cross member for support and transfer according to claim 27, **characterized in that** it has special interfaces for roller fitted pallets.

30. Mobile cross member for support and transfer according to claim 27, **characterized in that** it has special interfaces for ISO containers and roller fitted pallets.

31. Mobile cross member for support and transfer according to any one of the preceding claims, **characterized in that** it incorporates a means of immobilization (47) of the cross member (1) intended to cooperate with an additional locking device located at an appropriate position on the trailer (3).

32. Mobile cross member for support and transfer according to the preceding claim, **characterized in that** the means of immobilization (47) of the cross member (1) includes two locking fingers (48) extending at the rear of the cross member (1).

33. Mobile cross member for support and transfer according to any one of the preceding claims, **characterized in that** it also incorporates a means of adjustment assistance (50).

34. Mobile cross member for support and transfer according to the preceding claim, **characterized in that** the means of adjustment assistance (50) includes a series of balls (51) mounted so as to move within their location.

35. Mobile cross member for support and transfer according to the preceding claim, **characterized in that** the balls (51) are able to retract into a housing (52).

36. Mobile cross member for support and transfer according to the preceding claim, **characterized in that** the retractable nature of the balls (51) and their ability to return to the protruding position are given by compression springs designed to compensate the weight of the cross member (1) in the free state, and to sink when it is in a loaded state.
